(19) Europäisches Patentamt
European Patent Office
Office européen des brevets

(11) Veröffentlichungsnummer: **0 053 097**
**A1**

(12) # EUROPÄISCHE PATENTANMELDUNG

(21) Anmeldenummer: **81810456.4**

(22) Anmeldetag: **16.11.81**

(51) Int. Cl.³: **C 09 B 62/085**
D 06 P 3/66

(30) Priorität: **20.11.80 CH 8591/80**

(43) Veröffentlichungstag der Anmeldung:
**02.06.82 Patentblatt 82/22**

(84) Benannte Vertragsstaaten:
**CH DE FR GB LI**

(71) Anmelder: **CIBA-GEIGY AG**
**Patentabteilung Postfach**
**CH-4002 Basel(CH)**

(72) Erfinder: **Käser, Adolf, Dr.**
**Spitzackerstrasse 118**
**CH-8103 Bottmingen(CH)**

(54) **Reaktivfarbstoffe, deren Herstellung und Verwendung.**

(57) Reaktivfarbstoffe der Formel

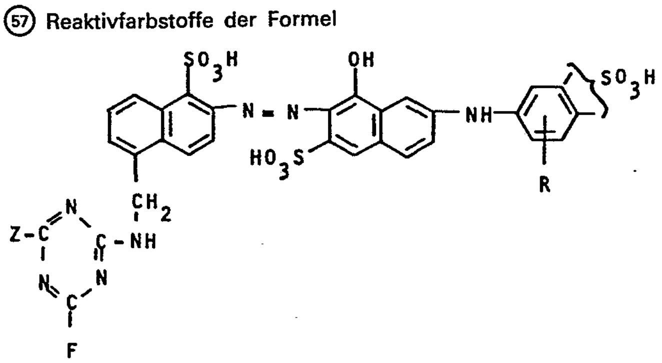

worin Z eine gegebenenfalls weitersubstituierte Sulfophenylamino- oder Sulfonaphthylaminogruppe und R Wasserstoff, $C_{1-4}$-Alkyl, $C_{1-4}$-Alkoxy, Halogen, Carboxy oder Sulfo ist, und deren Herstellung.

Die neuen Reaktivfarbstoffe sind besonders zum Färben von Baumwolle nach dem Ausziehfärbeverfahren geeignet und geben echte braune Färbungen.

EP 0 053 097 A1

Croydon Printing Company Ltd.

1-13161/-

## Reaktivfarbstoffe, deren Herstellung und Verwendung

Gegenstand der Erfindung sind Reaktivfarbstoffe der Formel

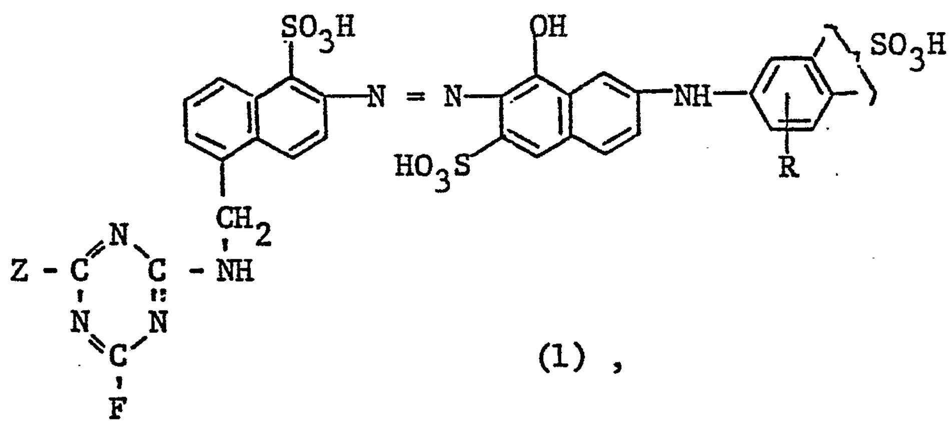

(1) ,

worin Z eine gegebenenfalls weitersubstituierte Sulfophenylamino- oder Sulfonaphthylaminogruppe und R Wasserstoff, $C_{1-4}$-Alkyl, $C_{1-4}$-Alkoxy, Halogen, Carboxy oder Sulfo ist.

Als Substituenten R kommen in Betracht:
Methyl, Aethyl, Propyl, Isopropyl, Butyl, Isobutyl, sek.-Butyl, tert.-Butyl, Methoxy, Aethoxy, Propyloxy, Isopropyloxy, Butyloxy, Isobutyloxy, sek.-Butyloxy, tert.-Butyloxy, Fluor, Chlor, Brom, Carboxy, Sulfo und insbesondere Wasserstoff.

Der Aminorest Z kann weitersubstituiert sein, z.B. durch: Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino, Aminogruppen, wie $-NH_2$,

Methylamino und Aethylamino, Ureido, Hydroxy, Carboxy, Sulfomethyl und Sulfo.

Als Beispiele für den Aminorest Z in Formel (1) seien genannt: 2-, 3- und 4-Sulfoanilino, 2,5-Disulfoanilino, 4-Methyl-2-sulfoanilino, 2-Chlor-5-sulfoanilino, 2-Carboxy-5-sulfophenylamino, 2-Carboxy-4-sulfophenylamino, 1-Sulfonaphthyl-(2)-amino, 4-Sulfonaphthyl-(1)-amino, 3,6-Disulfonaphthyl-(1)-amino, 3,6,8-Trisulfonaphthyl-(1)-amino und 4,6,8-Trisulfonaphthyl-(1)-amino.

Bevorzugt sind Reaktivfarbstoffe der Formel (1), worin R Wasserstoff, Methyl, Methoxy, Chlor, Carboxy oder Sulfo ist, und Z die unter Formel (1) angegebene Bedeutung hat.

Bevorzugt sind besonders Reaktivfarbstoffe der Formel

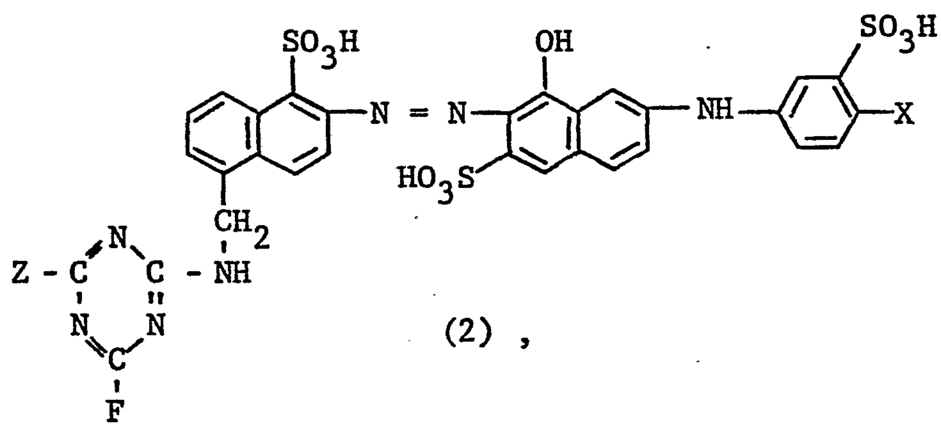

(2) ,

worin X Wasserstoff oder Methyl ist, und Z die unter Formel (1) angegebene Bedeutung hat; und Reaktivfarbstoffe der Formel

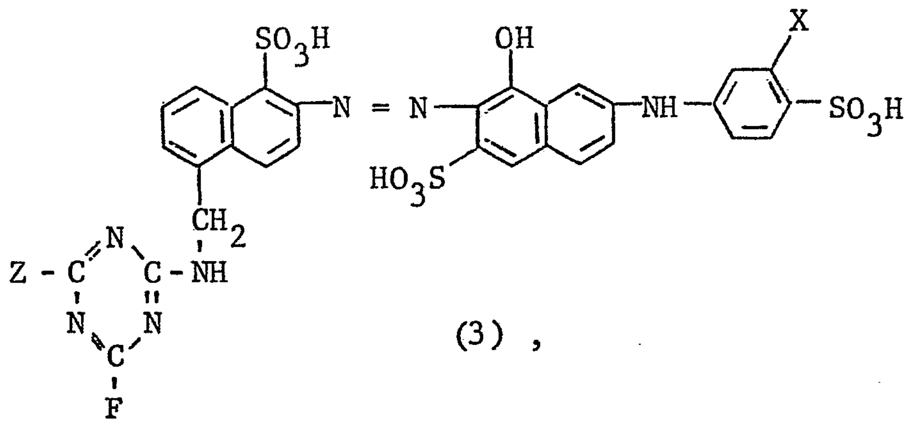

(3) ,

worin X Wasserstoff oder Methyl ist, und Z die unter Formel (1) angegebene Bedeutung hat.

Bevorzugt sind vor allem Reaktivfarbstoffe der Formeln (1), (2) und (3), worin Z ortho-Sulfophenylamino oder ortho-Sulfonaphthylamino ist.

Bevorzugt sind weiterhin Reaktivfarbstoffe der Formeln (2) und (3), worin Z Sulfophenylamino, das durch Chlor, Methyl, Methoxy, Acetylamino oder Sulfo weitersubstituiert sein kann, oder Sulfonaphthylamino, das durch Sulfo weitersubstituiert sein kann, ist.

Ein wertvoller Vertreter dieser bevorzugten Klasse ist der Reaktivfarbstoff der Formel

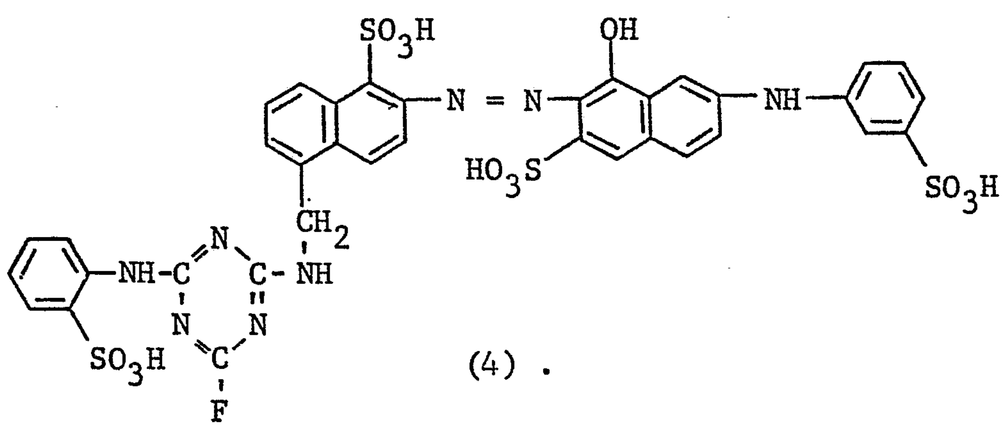

(4) .

Das Verfahren zur Herstellung von Reaktivfarbstoffen der Formel (1) ist dadurch gekennzeichnet, dass man eine Kupplungskomponente der Formel

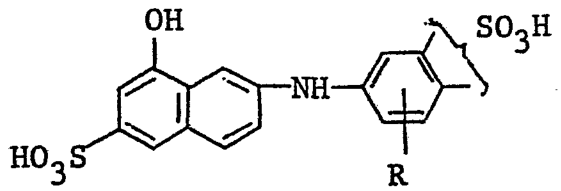

(5) ,

eine diazotierte Diazokomponente der Formel

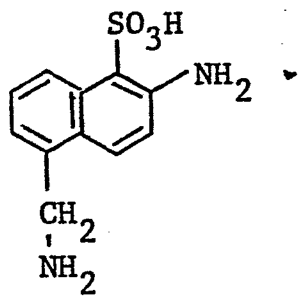

(6) ,

2,4,6-Trifluor-s-triazin der Formel

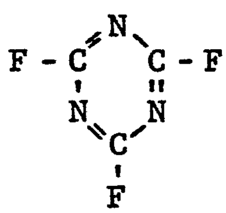

(7)

und ein Amin der Formel

$$H - Z \qquad (8)$$

in beliebiger Reihenfolge miteinander umsetzt.

Vorzugsweise verwendet man eine Kupplungskomponente der Formel (5), worin R Wasserstoff, Methyl, Methoxy, Chlor, Carboxy oder Sulfo ist, und ein Amin der Formel (8), worin Z die unter Formel (1) angegebene Bedeutung hat.

Da die einzelnen oben angegebenen Verfahrensschritte, nämlich Diazotierung, Kupplung und Kondensation in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einzelnen Reaktionen zwischen den einzelnen Reaktionskomponenten der Formeln (5), (6), (7) und (8) frei gewählt werden kann.

Die wichtigsten Verfahrensvarianten sind dadurch gekennzeichnet, dass man

1. eine Kupplungskomponente der Formel (5) mit einer diazotierten Diazokomponente der Formel (6) kuppelt, die erhaltene Monoazoverbindung mit 2,4,6-Trifluor-s-triazin der Formel (7) kondensiert und das primäre Kondensationsprodukt mit einem Amin der Formel (8) kondensiert.

Die beiden letzten Reaktionsschritte können auch in umgekehrter Reihenfolge ausgeführt werden, indem man das 2,4,6-Trifluor-s-triazin zuerst mit einem Amin der Formel (8) kondensiert und das erhaltene primäre Kondensationsprodukt mit der oben genannten Monoazoverbindung kondensiert.

2. eine Diazokomponente der Formel (6) mit 2,4,6-Trifluor-s-triazin der Formel (7) kondensiert, das primäre Kondensationsprodukt mit einem Amin der Formel (8) kondensiert, das erhaltene sekundäre Kondensationsprodukt diazotiert und auf eine Kupplungskomponente der Formel (5) kuppelt.

Auch bei dieser Herstellungsvariante kann die Kondensation mit dem Amin der Formel (8) wie unter 1. als letzter Reaktionsschritt ausgeführt werden.

Die bevorzugte Herstellungsweise des Reaktivfarbstoffes der Formel

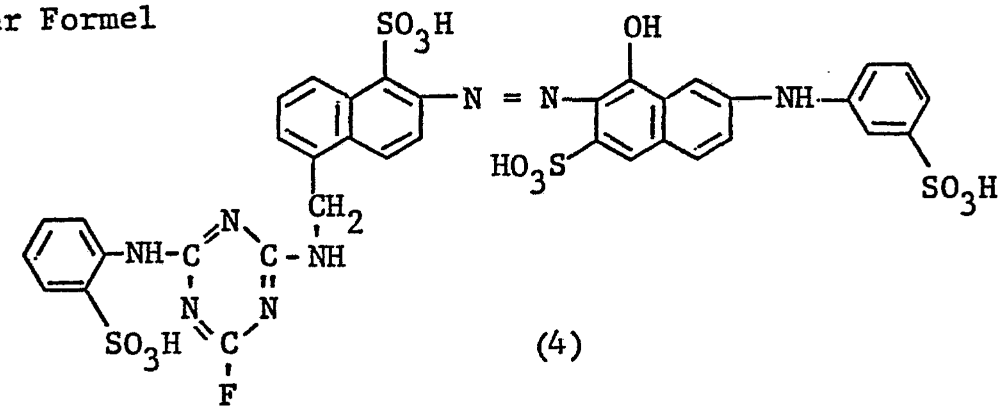

(4)

ist dadurch gekennzeichnet, dass man Anilin-2-sulfonsäure mit Cyanurfluorid kondensiert und das primäre Kondensationsprodukt mit der durch Kupplung von diazotierter 2-Amino-5-aminomethylnaphthalin-1-sulfonsäure auf 2-(3'-Sulfophenylamino)-8-hydroxynaphthalin-6-sulfonsäure erhaltenen Azoverbindung kondensiert.

Als Ausgangsverbindungen zur Herstellung der Reaktivfarbstoffe der Formel (1) können beispielsweise genannt werden:

a) <u>Kupplungskomponenten der Formel (5)</u>

2-(3'-Sulfophenylamino)-8-hydroxynaphthalin-6-sulfonsäure,
2-(4'-Sulfophenylamino)-8-hydroxynaphthalin-6-sulfonsäure,
2-(3'-Methyl-4'-sulfophenylamino)-8-hydroxynaphthalin-6-sulfonsäure,
2-(3'-Carboxy-4'-sulfophenylamino)-8-hydroxynaphthalin-6-sulfonsäure,
2-(3'-Chlor-4'-sulfophenylamino)-8-hydroxynaphthalin-6-sulfonsäure,
2-(3'-Methoxy-4'-sulfophenylamino)-8-hydroxynaphthalin-6-sulfonsäure,
2-(3'-Methyl-5'-sulfophenylamino)-8-hydroxynaphthalin-6-sulfonsäure,

2-(4'-Methyl-3'-sulfophenylamino)-8-hydroxynaphthalin-6-sulfonsäure,
2-(4'-Methoxy-3'-sulfophenylamino)-8-hydroxynaphthalin-6-sulfonsäure,
2-(4'-Fluor-3'-sulfophenylamino)-8-hydroxynaphthalin-6-sulfonsäure,
2-(4'-Chlor-3'-sulfophenylamino)-8-hydroxynaphthalin-6-sulfonsäure,
2-(4'-Carboxy-3'-sulfophenylamino)-8-hydroxynaphthalin-6-sulfonsäure.

b) Diazokomponente der Formel (6)

2-Amino-5-aminomethylnaphthalin-1-sulfonsäure.

c) 2,4,6-Trifluor-s-triazin der Formel (7) (Cyanurfluorid).

d) Amine der Formel (8)

Orthanilsäure, Metanilsäure, Sulfanilsäure, 4-Aminotoluol-3-sulfonsäure, 2-Aminotoluol-4-sulfonsäure, 2-Aminotoluol-5-sulfonsäure, 4-Aminoanisol-3-sulfonsäure, 4-Chloranilin-2-sulfonsäure, 2-Chloranilin-5-sulfonsäure, 4-Acetylamino-anilin-2-sulfonsäure, 5-Acetylaminoanilin-2-sulfonsäure, 2,4-Dimethylanilin-6-sulfonsäure, Anilin-2,4-disulfonsäure, Anilin-2,5-disulfonsäure, Anilin-3,5-disulfonsäure,

1-Amino-4-carboxybenzol-3-sulfonsäure, 1-Amino-2-carboxy-benzol-5-sulfonsäure, 1-Amino-5-carboxybenzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8-

und -4,6,8-trisulfonsäure, 2-Naphthylamin-1,3,7-, -1,5,7-, -3,5,7-, -3,6,7-, -3,6,8- und -4,6,8-trisulfonsäure.

Die Diazotierung der Diazokomponenten erfolgt in der Regel durch Einwirkung salpetriger Säure in wässrig-mineralsaurer Lösung bei tiefer Temperatur, die Kupplung auf die Kupplungskomponenten bei schwach sauren, neutralen bis schwach alkalischen pH-Werten.

Die Kondensationen des 2,4,6-Trifluor-s-triazins der Formel (7) mit den Diazokomponenten der Formel (6) und den Aminoverbindungen der Formel (8) erfolgen vorzugsweise in wässriger Lösung oder Suspension; bei niedriger Temperatur und bei schwach saurem, neutralem bis schwach alkalischem pH-Wert, so dass im fertigen Reaktivfarbstoff der Formel (1) noch mindestens ein Fluoratom als abspaltbarer Rest übrig bleibt. Vorteilhaft wird der bei der Kondensation freiwerdende Fluorwasserstoff laufend durch Zugabe wässriger Alkalihydroxyde, -carbonate oder -bicarbonate neutralisiert.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Die Farbstoffe der Formel (1) sind faserreaktiv, da sie im s-Triazinrest ein abspaltbares Fluoratom enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) sind neu. Sie zeichnen sich durch hohe Reaktivität aus, und sie ergeben Färbungen mit guten Nass- und Lichtechtheiten. Besonders hervorzuheben ist es, dass die Farbstoffe eine gute Löslichkeit und Elektrolytlöslichkeit bei guten Ausziehеigenschaften und hoher Farbstoff-Fixierung aufweisen, und dass sich die nicht fixierten Anteile leicht entfernen lassen.

Ferner ist hervorzuheben, dass die mit den Reaktivfarbstoffen der Formel (1) erhältlichen Färbungen gut weissätzbar sind.

Die Reaktivfarbstoffe der Formel (1) eignen sich zum Färben und Bedrucken der verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Sie eignen sich insbesondere zum Färben nach dem Ausziehverfahren, z.B. nach der All-in-Methode, wobei die Farbstofflösung alle zur Fixierung notwendigen Chemikalien enthält, und dem Kaltverweilverfahren.

Sie eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittel zu unterwerfen.

Die Herstellung der Monoazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

Beispiel 1

Zu einer eiskalten neutralen Lösung von 17,3 Teilen Anilin-2-sulfonsäure in 400 Teilen Wasser werden im Laufe von 10 Minuten 10 Teile Cyanurfluorid eingetropft, wobei durch gleichzeitige Zugabe von 1n-Natriumhydroxidlösung der pH-Wert zwischen 6 und 7 gehalten wird. Nach erfolgter Kondensation wird eine eiskalte Lösung von 65,8 Teilen des Farbstoffes der Formel

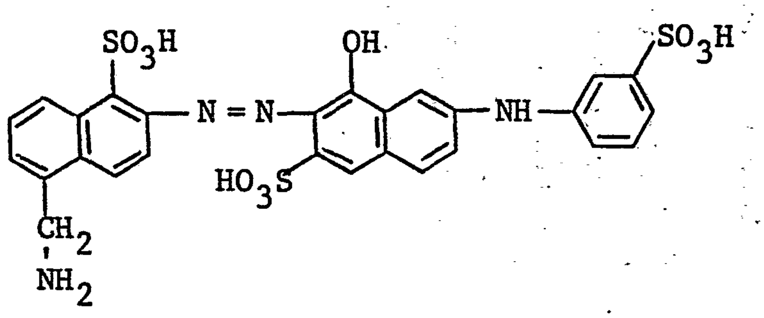

in 800 Teilen Wasser zugegeben. Man rührt über Nacht im ausgehenden Eisbad und hält den pH-Wert der Lösung durch Zutropfen von 1n-Natriumhydroxidlösung bei 8. Der gebildete Farbstoff wird mit 10 Vol.% Kaliumchlorid ausgesalzen und abfiltriert. Nach Vermischen mit einer gesättigten wässrigen Lösung von 1,0 Teilen Dinatiumhydrogenphsophat wird die Farbstoffpaste im Vakuum bei 45° getrocknet.

Der so erhaltene Farbstoff färbt Baumwolle in attraktiven, neutralen Brauntönen.

Aehnliche Farbstoffe, die Baumwolle in braunen Tönen färben, werden erhalten, wenn man nach den Angaben dieses Beispiels verfährt, jedoch anstelle des dort angegebenen Chromophors einen Azofarbstoff aus 2-Amino-5-aminomethylnaphthalin-1-sulfonsäure und einer der in Spalte 2 genannten Kupplungskomponenten, und anstelle der Anilin-2-sulfonsäure eines der in Spalte 3 der folgenden Tabelle genannten Amine verwendet.

Tabelle

| No. | Kupplungskomponente | Amin |
|---|---|---|
| 2 | 2-(3'-Sulfophenylamino)-8-hydroxynaphthalin-6-sulfonsäure | 4-Aminotoluol-3-sulfonsäure |
| 3 | " | 2-Aminotoluol-4-sulfonsäure |
| 4 | " | 2-Aminotoluol-5-sulfonsäure |
| 5 | " | 4-Aminoanisol-3-sulfonsäure |
| 6 | " | 4-Chloranilin-2-sulfonsäure |
| 7 | " | 2-Chloranilin-5-sulfonsäure |
| 8 | " | 4-Acetylaminoanilin-2-sulfonsäure |
| 9 | " | 5-Acetylaminoanilin-2-sulfonsäure |
| 10 | " | Anilin-2,4-disulfonsäure |
| 11 | " | Anilin-2,5-disulfonsäure |
| 12 | " | 2-Naphthylamin-1-sulfonsäure |
| 13 | " | 2-Naphthylamin-3,6-disulfonsäure |
| 14 | " | 2-Naphthylamin-1,5-disulfonsäure |
| 15 | " | 2,4-Dimethylanilin-6-sulfonsäure |
| 16 | 2-(4'-Sulfophenylamino)-8-hydroxynaphthalin-6-sulfonsäure | Anilin-2-sulfonsäure |
| 17 | " | 4-Aminotoluol-3-sulfonsäure |
| 18 | " | 2-Aminotoluol-4-sulfonsäure |

| No. | Kupplungskomponente | Amin |
|---|---|---|
| 19 | 2-(4'-Sulfophenylamino)-8-hydroxynaphthalin-6-sulfonsäure | 2-Aminotoluol-5-sulfonsäure |
| 20 | " | 4-Aminoanisol-3-sulfonsäure |
| 21 | 2-(4'-Methyl-3'-sulfophenylamino)-8-hydroxy-naphthylin-6-sulfonsäure | Anilin-2-sulfonsäure |
| 22 | " | 4-Aminotoluol-3-sulfonsäure |
| 23 | " | 2-Aminotoluol-4-sulfonsäure |
| 24 | " | 2-Aminotoluol-5-sulfonsäure |
| 25 | " | 4-Aminoanisol-3-sulfonsäure |
| 26 | 2-(3'-Methyl-4'-sulfophenylamino)-8-hydroxy-naphthalin-6-sulfonsäure | Anilin-2-sulfonsäure |
| 27 | " | 4-Aminotoluol-3-sulfonsäure |
| 28 | " | 2-Aminotoluol-4-sulfonsäure |
| 29 | " | 2-Aminotoluol-5-sulfonsäure |
| 30 | " | 4-Aminoanisol-3-sulfonsäure |

Beispiel 31

Zu einer eiskalten Lösung von 65,8 Teilen des Farbstoffes der Formel

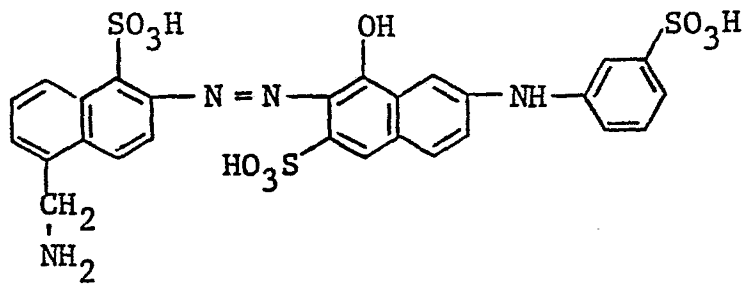

in 800 Teilen Wasser werden innerhalb von 10 Minuten 10 Teile Cyanurfluorid eingetropft. Der pH-Wert der Lösung wird durch gleichzeitiges Zutropfen von 1n-Natriumhydroxidlösung bei 6 bis 8 gehalten. Nach beendeter Kondensation wird eine Lösung von 17,3 Teilen Anilin-3-sulfonsäure in 200 Teilen Wasser zugegeben. Man rührt im ausgehenden Eisbad und hält den pH-Wert der Lösung durch Zugabe von 1n-Natriumhydroxidlösung bei 7. Der gebildete Farbstoff wird auf gleiche Weise isoliert wie in Beispiel 1 angegeben.

Aehnliche Farbstoffe werden erhalten, wenn anstelle von Anilin-3-sulfonsäure äquivalente Mengen Anilin-4-sulfonsäure, 2-Naphthylamin-6-sulfonsäure oder 2-Naphthylamin-8-sulfonsäure verwendet werden.

Färbevorschrift I

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet.

Danach imprägniert man das Gewebe mit einer 20° warmen Lösung, die pro Liter 5 Gramm Natriumhydroxid und 300 Gramm Natriumchlorid enthält, quetscht auf 75% Gewichtszunahme ab, dämpft die Färbung während 30 Sekunden bei 100 bis 101°, spült, seift während einer Vieltelstunde in einer 0,3%igen kochenden Lösung eines ionenfreien Waschmittels, spült und trocknet.

Färbevorschrift II

2 Teile des gemäss Beispiel 1 erhältlichen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 40°, wobei nach 30 Minuten 40 Teile kalzinierte Soda und nochmals 60 Teile Natriumchlorid zugegeben werden. Man hält die Temperatur 30 Minuten auf 40°, spült und seift dann die Färbung während 15 Minuten in einer 0,3%igen kochenden Lösung eines ionenfreien Waschmittels, spült und trocknet.

Patentansprüche

1. Reaktivfarbstoffe der Formel

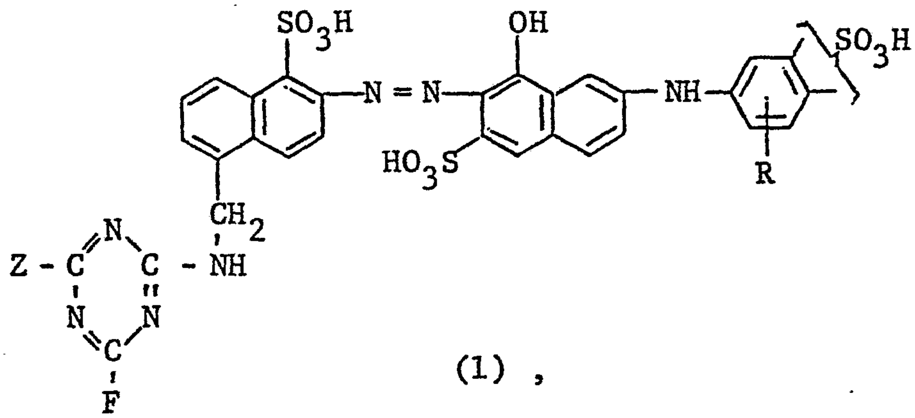

(1) ,

worin Z eine gegebenenfalls weitersubstituierte Sulfophenylamino- oder Sulfonaphthylaminogruppe und R Wasserstoff, $C_{1-4}$-Alkyl, $C_{1-4}$-Alkoxy, Halogen, Carboxy oder Sulfo ist.

2. Reaktivfarbstoffe gemäss Anspruch 1, worin R Wasserstoff, Methyl, Methoxy, Chlor, Carboxy oder Sulfo ist, und Z die in Anspruch 1 angegebene Bedeutung hat.

3. Reaktivfarbstoffe gemäss Anspruch 1,der Formel

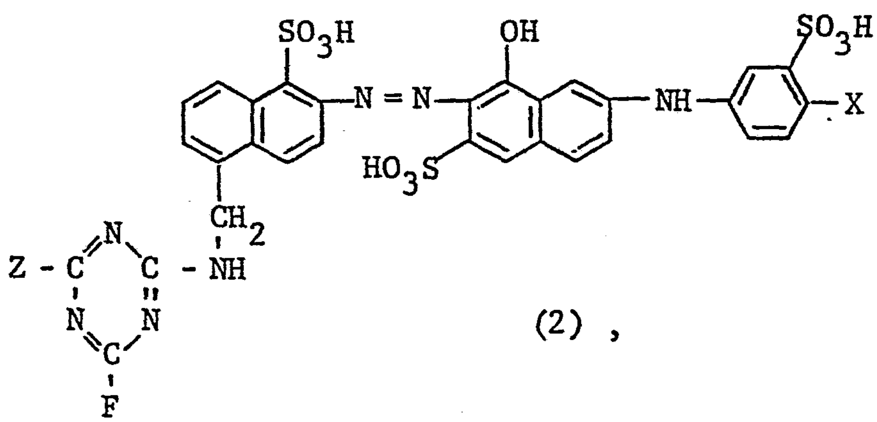

(2) ,

worin X Wasserstoff oder Methyl ist, und Z die in Anspruch 1 angegebene Bedeutung hat.

4. Reaktivfarbstoffe gemäss Anspruch 1,der Formel

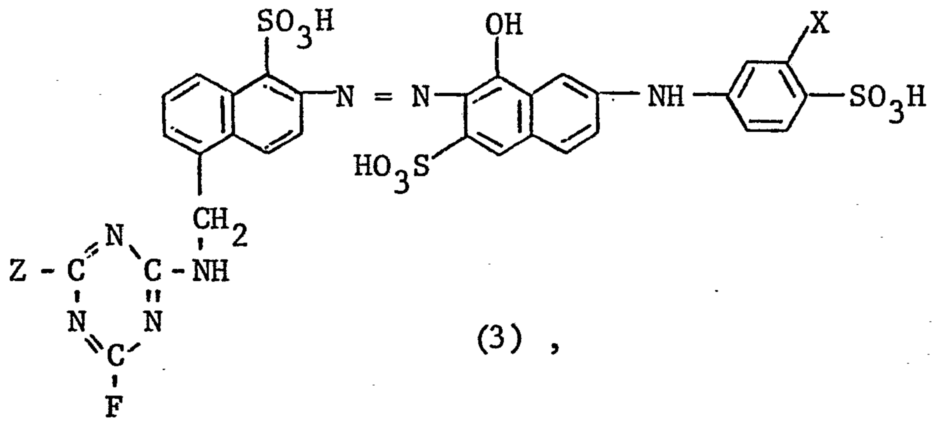

(3) ,

worin X Wasserstoff oder Methyl ist, und Z die in Anspruch 1 angegebene Bedeutung hat.

5. Reaktivfarbstoffe gemäss einem der Ansprüche 1 bis 4, worin Z ortho-Sulfophenylamino oder ortho-Sulfonaphthylamino ist.

6. Reaktivfarbstoffe gemäss einem der Ansprüche 3 und 4, worin Z Sulfophenylamino, das durch Chlor, Methyl, Methoxy, Acetylamino oder Sulfo weitersubstituiert sein kann, oder Sulfonaphthylamino, das durch Sulfo weitersubstituiert sein kann, ist.

7. Der Reaktivfarbstoff gemäss Anspruch 6, der Formel

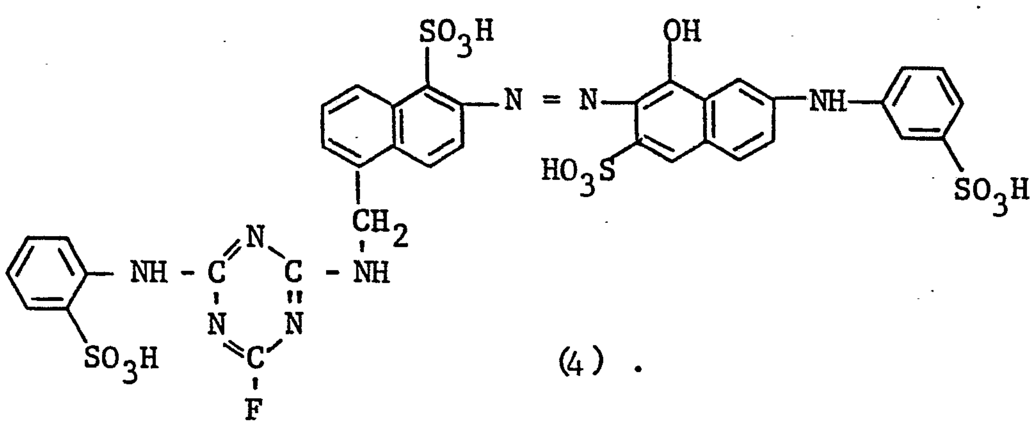

(4) .

8. Verfahren zur Herstellung von Reaktivfarbstoffen der Formel (1), gemäss Anspruch 1, dadurch gekennzeichnet, dass man eine Kupplungskomponente der Formel

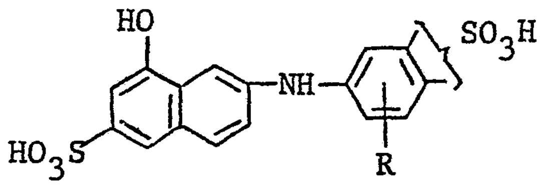

(5)

eine diazotierte Diazokomponente der Formel

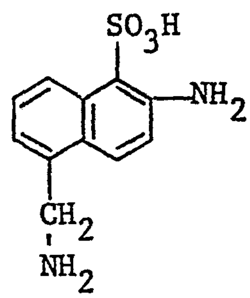

(6) ,

2,4,6-Trifluor-s-triazin der Formel

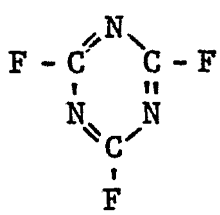

(7)

und ein Amin der Formel

$$H - Z \qquad (8)$$

in beliebiger Reihenfolge miteinander umsetzt.

9. Verwendung der Reaktivfarbstoffe gemäss den Ansprüchen 1 bis 7 zum Färben und Bedrucken.

10. Verwendung gemäss Anspruch 9 zum Färben von Cellulosefasern.

0053097

Europäisches Patentamt

# EUROPÄISCHER RECHERCHENBERICHT

Nummer der Anmeldung

EP 81 81 0456

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | GB - A - 2 024 840 (BAYER)<br>* Patentansprüche 1,11,12,17; Seite 1, Zeile 37 und Zeilen 20-27; Seite 4, Zeile 15 *<br>& DE - A - 2 829 711<br>-- | 1,2,5,<br>8,9,10 |
| A | FR - A - 2 407 244 (CIBA-GEIGY)<br>* Patentansprüche 1,7,14,16,28 *<br>& DE - A - 2 847 173<br>-- | 1,2,5,<br>8,9,10 |
| A | FR - A - 2 223 434 (BAYER)<br>* Patentanspruch 1 *<br>& DE - A - 2 315 638<br>------ | 1 |

KLASSIFIKATION DER ANMELDUNG (Int. Cl.³)

C 09 B 62/085
D 06 P 3/66

RECHERCHIERTE SACHGEBIETE (Int. Cl.³)

C 09 B 62

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

☒ Der vorliegende Recherchenbericht wurde für alle Patentansprüche erstellt.

| Recherchenort | Abschlußdatum der Recherche | Prüfer |
|---|---|---|
| Den Haag | 17.02.1982 | GINESTET |

EPA form 1503.1 06.78